# FASCICULE DE BREVET EUROPEEN

(11) **EP 1 619 377 B1**
(45) Date de publication et mention de la délivrance du brevet: **18.10.2017**
(21) Numéro de dépôt: 05105972.3
(22) Date de dépôt: 30.06.2005
(51) Int. Cl.: F02K 3/11

(54) **Turboréacteur avec un écran de protection de la rampe de carburant d'un anneau brûleur**
Turbomaschine mit einer Schutzvorrichtung für die Brennstoffleitung eines Ringbrenners
Turbomachine with a protective screen for the fuel manifold of an annular burner

(30) Priorité: 23.07.2004 FR 0408153
(43) Date de publication de la demande: 25.01.2006
(73) Titulaire: Safran Aircraft Engines, 75015 Paris (FR)
(72) Inventeur: Page, Alain, Pierre, 91230, Montgeron (FR); Pommier, Nicolas, 91800, Brunoy (FR); Roche, Jacques-A, 91090, Lisses (FR); Touchaud, Stéphane, Henri, Guy, 75012, Paris (FR)
(74) Mandataire: Gevers & Orès

(56) Documents cités:
- DE-B- 1 133 185
- FR-A- 1 245 920
- FR-A- 2 709 342
- US-A- 4 899 539
- US-A- 5 297 391

## Description

L'invention concerne un turboréacteur comprenant un canal de réchauffe du flux de gaz primaire, un anneau brûleur et un écran de protection de la rampe de carburant de l'anneau brûleur. L'invention concerne également un anneau brûleur et un écran de protection pour le turboréacteur.

Les turboréacteurs à post combustion comprennent généralement, d'amont en aval dans le sens d'écoulement des gaz, un ou plusieurs étages de compresseur, une chambre de combustion, un ou plusieurs étages de turbine, un canal de réchauffe ou canal de post combustion, et une tuyère d'éjection. Le flux de gaz primaire est comprimé dans les étages de compresseur, participe à la combustion du carburant dans la chambre de combustion, se détend dans les étages de turbine et permet une nouvelle combustion de carburant, grâce à l'oxygène encore présent en son sein, dans le canal de réchauffe avant de se détendre dans la tuyère d'éjection.

Le canal de réchauffe comprend généralement, en entrée, des bras, accroche-flammes, qui s'étendent radialement dans le flux de gaz primaire et comportent un injecteur de carburant projetant ce dernier dans la veine de gaz, en direction de l'aval. Le carburant est enflammé et les flammes sont, du fait de la forme de la section des bras, entraînant une dépression, "accrochées" aux parois des bras.

Il peut également être prévu un anneau, brûleur, placé concentrique au carter du canal de réchauffe et fonctionnant suivant le même principe. L'anneau comporte généralement une enceinte extérieure se présentant sous la forme d'une gouttière, comportant une section en forme de U, ouverte du côté aval du canal de réchauffe, dans la veine de gaz du flux primaire, dans laquelle est logée une rampe de carburant, de section, en vue en coupe axiale, circulaire, dont la fonction est de projeter du carburant vers l'aval.

En aval de la rampe, le carburant est enflammé, et la flamme est accrochée à la gouttière de l'anneau du fait de la forme de cette dernière. Il s'ensuit les re-circulations de gaz dans l'enceinte de la gouttière sont des re-circulations de gaz très chauds. Afin d'être protégée thermiquement, la rampe de carburant est enveloppée par un écran anti-rayonnement. Cet écran comporte des orifices de passage du carburant, correspondant à des orifices de la rampe, généralement répartis deux par deux, dans un même plan axial, à des positions angulaires régulières sur l'anneau.

Pour diverses raisons de rendement, on a voulu augmenter les dimensions de l'ouverture de la gouttière. La re-circulation des gaz chauds en a été d'autant augmentée, et on a constaté des déformations, des criques et des brûlures sur l'écran anti-rayonnement, notamment entre les orifices de passage du carburant du côté aval de l'écran qui "voit" la flamme. Dans ces zones, la protection de la rampe de carburant est par conséquent moins bien assurée, entraînant un risque de cokéfaction de la rampe.

Le document US 4,899,539 présente un turboréacteur, comportant un bras radial accroche-flammes, dans lequel s'étend une rampe de carburant protégée par un écran tubulaire.

La présente invention vise à améliorer le refroidissement de l'écran anti-rayonnement.

A cet effet, l'invention concerne un anneau brûleur selon la revendication 1.

L'écran comportant une pluralité de paires d'orifices, il peut comprendre un orifice de ventilation percé à la même position angulaire que chaque paire d'orifices.

L'invention concerne également un turboréacteur à double flux selon la revendication 3.

Le turboréacteur à double flux peut comprendre un ou plusieurs étages de compresseur, une chambre de combustion, un ou plusieurs étages de turbine, un canal de réchauffe du flux primaire et une tuyère d'éjection, le flux secondaire débouchant au moins en partie dans le flux primaire en amont du canal de réchauffe, le canal de réchauffe comprenant un anneau brûleur tel que défini dans la revendication 1, comportant une gouttière accroche-flamme en forme de portion d'anneau dont la partie amont est située dans le flux secondaire, logeant une rampe de carburant et un écran tubulaire de protection de la rampe, caractérisé par le fait que la gouttière comporte un évidement amont relié au flux secondaire, et l'écran comporte, sur sa partie amont, au moins un orifice de ventilation de l'espace situé entre l'écran et la rampe.

Avantageusement dans ce cas, la rampe comprenant au moins une paire d'orifices de pulvérisation de carburant, l'écran comportant au moins une paire d'orifices correspondants, un orifice de ventilation est percé sur l'écran à la même position angulaire que la paire d'orifices.

Avantageusement encore, l'écran comportant une pluralité de paires d'orifices, il comprend un orifice de ventilation percé à la même position angulaire de chaque paire d'orifices.

L'invention sera mieux comprise à l'aide de la description suivante de la forme de réalisation préférée du turboréacteur de l'invention, en référence aux planches annexées, sur lesquelles :
- la figure 1 représente une vue partielle en coupe axiale de la forme de réalisation préférée du turboréacteur de l'invention, dans la zone de l'anneau brûleur ;
- la figure 2 représente une vue partielle en coupe transversale du turboréacteur de l'invention ;
- la figure 3 représente une vue en perspective de la rampe de carburant de l'anneau brûleur du turboréacteur de l'invention ;
- la figure 4 représente une vue en perspective de l'écran anti-rayonnement de l'anneau brûleur du turboréacteur de l'invention ;
- la figure 5 représente une vue en coupe axiale de l'anneau brûleur du turboréacteur de l'invention, dans un plan ne comportant pas de paire d'orifices et
- la figure 6 représente une vue en coupe axiale de l'anneau brûleur du turboréacteur de l'invention, dans un plan comportant une paire d'orifices.

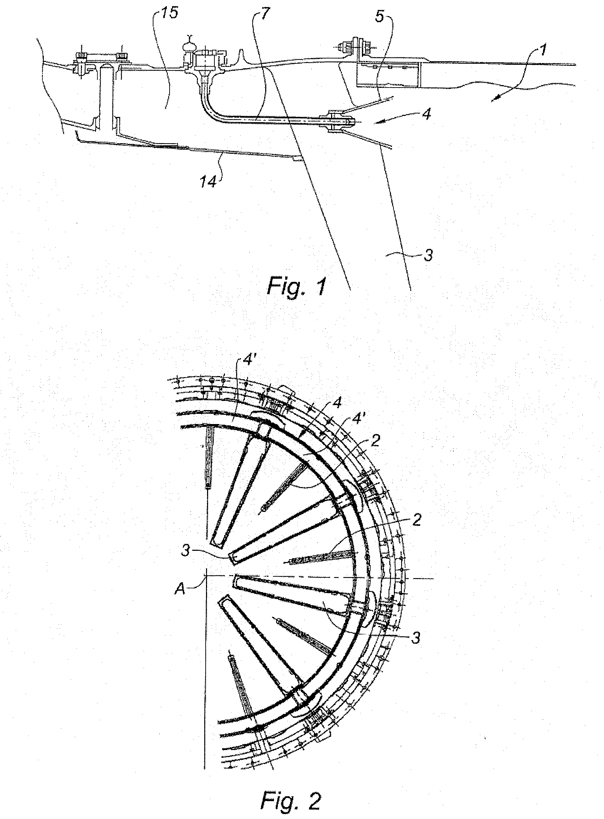

En référence à la figure 1, le turboréacteur de l'invention, qui s'étend globalement suivant un axe A, comprend plusieurs étages de compresseur, une chambre de combustion, plusieurs étages de turbine, un canal de réchauffe du flux primaire 1 et une tuyère d'éjection.

En référence à la figure 2, en entrée du canal de réchauffe 1, s'étendent radialement des bras injecteurs de carburant 2, dont la fonction est de vaporiser du carburant en direction de bras accroche-flammes 3, situés en aval des bras injecteurs de carburant 2 et s'étendant radialement dans le canal de réchauffe 1.

Au niveau des bras accroche-flammes 3, le flux secondaire, c'est-à-dire le flux d'air froid qui n'est pas passé dans la chambre de combustion, débouche dans le flux primaire. Une virole 14 est placée en amont des bras 3 et délimite un canal de flux secondaire 15. En aval de cette virole 14, ce flux secondaire se mélange, au moins en partie, au flux primaire, dans le canal de réchauffe 1.

Les bras accroche-flammes 3 sont au même nombre, ici de neuf, que les bras injecteurs de carburant 2 et sont décalés angulairement par rapport à ces derniers, de façon à ce qu'en vue de face, chaque bras injecteur de carburant 2 soit situé entre deux bras accroche-flammes 3 consécutifs, à équidistance d'eux. Les bras injecteurs de carburant 2 sont radialement plus petits que les bras accroche-flammes 3.

A proximité du carter du canal de réchauffe 1, les bras accroche-flammes 3 supportent un anneau brûleur 4. Cet anneau 4 est constitué d'une pluralité de portions d'anneau 4', ici au nombre de neuf, qui s'étendent, concentriquement au carter du canal de réchauffe 1, entre deux bras accroche-flammes 3 successifs. Il sera dans la suite fait allusion à l'anneau 4, étant entendu qu'il s'agira en fait d'une portion d'anneau 4', et que les éléments constitutifs de l'anneau 4 seront en l'occurrence des éléments constitutifs d'une portion d'anneau 4', et ne s'étendront donc que sur un tronc d'anneau et non selon une circonférence annulaire fermée.

Les bras injecteurs de carburant 2 s'étendent radialement, perpendiculairement à l'axe du turboréacteur. Les bras accroche-flammes 3 s'étendent radialement, inclinés vers l'aval, à partir de leur base, par rapport à la perpendiculaire à l'axe du turboréacteur contenue dans le plan axial du bras 3. Les bras injecteurs de carburant 2 vaporisent du carburant en direction de l'aval. Les bras accroche-flammes 3 font de même, et assure de surcroît l'inflammation du carburant et l'accroche des flammes par ses parois extérieures, dimensionnées à cet effet.

L'anneau brûleur 4 comporte une gouttière accroche-flammes 5, délimitant son enceinte extérieure, ouverte, qui présente en vue en coupe axiale une section en U, dont les branches sont tournées vers l'aval. La gouttière s'étend selon une direction, ou génératrice, annulaire. La branche externe du U est plus grande que la branche interne, et les branches du U ne sont pas parallèles ; il s'agirait plus d'un V à base arrondie ; il sera fait mention dans la suite d'une section en forme de U.

La gouttière 5 est placée à l'extérieur, juste en aval de la virole 14. Ainsi, la paroi amont formant la base de sa section en U est en contact avec le flux secondaire, froid, tandis que ses parois aval formant les branches de sa section en U, dont la fonction est d'accrocher les flammes du canal de réchauffe 1, sont soumis directement à la chaleur de ces dernières.

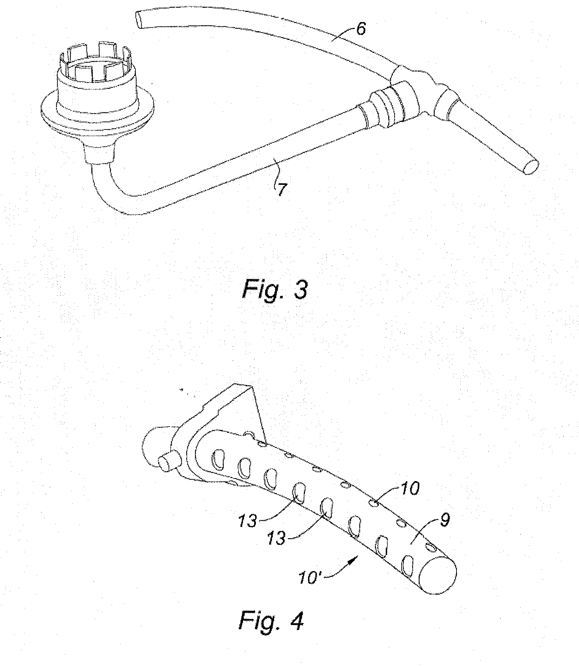

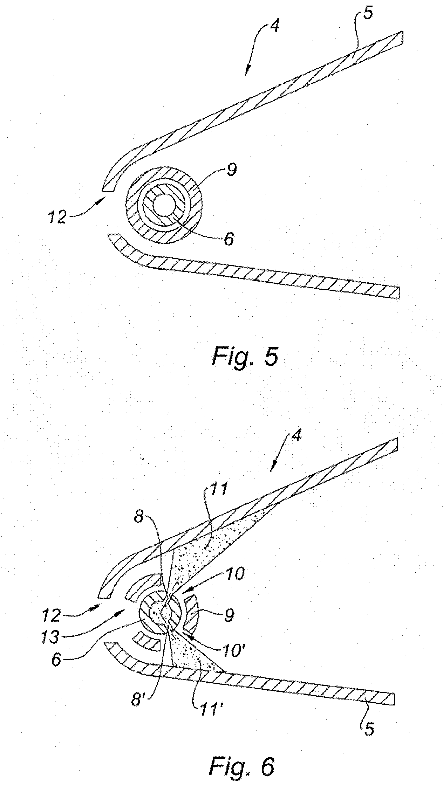

En référence à la figure 3, à proximité de la base du U, la gouttière 5 loge une rampe de carburant 6, de section, en vue en coupe axiale, circulaire et qui suit la forme circonférentielle de la gouttière 5. La rampe 6 est alimentée en carburant par une canalisation d'alimentation 7, longitudinale, qui lui est connectée de son côté amont. En référence à la figure 6, elle comprend, disposées à des positions angulaires régulières, des paires d'orifices circulaires 8, 8' de pulvérisation de carburant. Les orifices d'une même paire d'orifices 8, 8' se situent dans un même plan axial et sont symétriques l'un par rapport à l'autre par rapport au plan perpendiculaire audit plan axial, parallèle à l'axe A du turboréacteur et coupant la section de la rampe 6, à la position angulaire des orifices 8, 8', en deux demi-cercles égaux. Les orifices 8, 8' se situent dans la portion aval de la rampe de carburant 6.

En référence à la figure 4, la rampe 6 est enveloppée dans un écran anti-rayonnement 9, de même forme tubulaire que la rampe 6 mais dont la section forme un cercle de diamètre plus grand, dont la fonction est de protéger la rampe 6 des rayonnements des flammes se situant en aval, en l'occurrence accrochées aux parois correspondant aux branches de la section en forme de U de la gouttière 5.

L'écran 9 comprend, de la même façon que dans l'art antérieur, des paires d'orifices circulaires 10, 10' de passage du carburant, dont les orifices 10, 10' sont chacun dans le prolongement angulaire, à partir du centre du cercle formé par la section axiale de la rampe 6, d'un orifice 8, 8', respectivement, d'une paire d'orifices 8, 8' de la rampe 6. Les orifices 10, 10' de l'écran 9 sont de diamètre plus grand que les orifices 8, 8' de la rampe 6, afin de compenser l'ouverture du jet de carburant 11, 11', respectivement, comme on le voit sur la figure 6.

La gouttière 5 de l'anneau brûleur 4 comporte, au niveau de sa paroi correspondant à la base de sa section en forme de U, c'est-à-dire du côté amont, un évidement transversal 12 qui suit sa génératrice. Cet évidement 12 est en communication avec le canal de flux secondaire 15 du turboréacteur. Le flux d'air secondaire vient donc refroidir l'écran anti-rayonnement 9 par l'évidement transversal 12. Cet évidement 12 peut se présenter sous la forme d'un évidement continu le long de la génératrice de la gouttière 5, avec des pattes de liaison entre ses bords externe et interne, ou peut être remplacé par une série de perçages.

L'écran anti-rayonnement 9 de l'invention diffère des écrans de l'art antérieur par la présence, à la même position angulaire que les paires d'orifices 10, 10', d'orifices circulaires amont 13, de ventilation de la zone située entre la rampe 6 et l'écran 9.

En référence à la figure 5, dans une zone de l'écran anti-rayonnement 9 ne comportant pas d'orifices 10, 10', l'air du flux secondaire passe par l'évidement de la gouttière 5 et vient impacter la paroi de l'écran 9 sur sa portion amont. La portion aval de l'écran, qui fait face à la flamme accrochée aux bords de fuite des parois de la gouttière 5, est refroidie par conduction. En effet, dans cette zone sans orifices, il y a continuité entre la portion amont et la portion aval de l'écran 9 ; le refroidissement procuré par l'impact de la portion amont par l'air du flux secondaire se transmet donc par conduction jusqu'à sa portion aval. L'écran 9 est donc convenablement refroidi et assure la protection thermique de la rampe de carburant 6.

En référence à la figure 6, dans une zone de l'écran anti-rayonnement 9 comportant une paire d'orifices 10, 10', l'air du flux secondaire passe par l'évidement de la gouttière 5, puis par l'orifice de ventilation 13 de l'écran 9. Il vient alors refroidir, non seulement les portions amont de l'écran 9 situées autour de l'orifice de ventilation 13, mais aussi l'espace entre la rampe 6 et l'écran 9 puis, en circulant le long de cet espace, la portion aval de l'écran 9. La portion aval de l'écran 9, notamment celle située entre deux orifices 10, 10', est donc refroidie, ce qui permet d'éviter les inconvénients cités plus haut.

Grâce à l'invention, on obtient un refroidissement de la portion aval de l'écran 9 dans les zones de ses orifices 10, 10', ce qui n'était pas possible avec les écrans de l'art antérieur, puisque la conduction de la chaleur de la portion amont vers la portion aval ne pouvait avoir lieu, ces deux portions n'étant pas reliées de façon continue du fait des orifices 10, 10'. On obtient en outre une ventilation de l'espace situé entre la rampe 6 et l'écran 9, dans les zones comportant des orifices 10, 10'. Ceci est obtenu grâce au perçage d'un orifice de ventilation 13 dans le plan transversal, par rapport à la forme de l'écran 9, c'est-à-dire axial par rapport au turboréacteur, de chacune des paires d'orifices 10, 10' qu'il contient.

## Revendications

1. Anneau brûleur (4) pour un turboréacteur, comportant une gouttière accroche-flamme (5) en portion d'anneau et dont la base est en amont, une rampe de carburant (6) et un écran (9) de protection de la rampe (6) étant logés dans la gouttière, **caractérisé par le fait que** la gouttière (5) comporte un évidement amont (12), que l'écran (9) comporte, sur sa partie amont, au moins un orifice (13) de ventilation de l'espace situé entre l'écran (9) et la rampe (6), et **par le fait que** la rampe (6) comprend au moins une paire d'orifices (8, 8') de pulvérisation de carburant, l'écran (9) comportant au moins une paire d'orifices (10, 10') correspondants, un orifice de ventilation (13) étant percé sur l'écran (9) à la même position angulaire que la paire d'orifices (10, 10').

2. Anneau brûleur (4) selon la revendication 1 dans lequel l'écran (9) comportant une pluralité de paires d'orifices (10, 10'), il comprend un orifice de ventilation (13) percé à la même position angulaire que chaque paire d'orifices (10, 10').

3. Turboréacteur à double flux, comprenant un canal de réchauffe du flux primaire (1), le flux secondaire débouchant au moins en partie dans le flux primaire en amont du canal de réchauffe (1), le canal de réchauffe (1) comprenant un anneau brûleur (4) tel que défini dans la revendication 1, comportant une gouttière accroche-flamme (5) en forme de portion d'anneau dont la partie amont est située dans le flux secondaire, logeant une rampe de carburant (6) et un écran tubulaire (9) de protection de la rampe (6), **caractérisé par le fait que** la gouttière (5) comporte un évidement amont (12) relié au flux secondaire, et l'écran (9) comporte, sur sa partie amont, au moins un orifice (13) de ventilation de l'espace situé entre l'écran (9) et la rampe (6).

4. Turboréacteur selon la revendication 3 dans lequel, la rampe (6) comprenant au moins une paire d'orifices (8, 8') de pulvérisation de carburant, l'écran (9) comportant au moins une paire d'orifices (10, 10') correspondants, un orifice de ventilation (13) est percé sur l'écran (9) à la même position angulaire que la paire d'orifices (10, 10').

5. Turboréacteur selon la revendication 4 dans lequel, l'écran (9) comportant une pluralité de paires d'orifices (10, 10'), il comprend un orifice de ventilation (13) percé à la même position angulaire que chaque paire d'orifices (10, 10').

## Patentansprüche

1. Brennerring (4) für ein Turbotriebwerk, der einen als Rinne ausgebildeten Flammhalter (5) als ein Ringabschnitt aufweist, und dessen Basis stromaufwärts gelegen ist, wobei ein Kraftstoffverteiler (6) und ein Schirm (9) zum Schutz des Verteilers (6) in der Rinne untergebracht sind, **dadurch gekennzeichnet, dass** die Rinne (5) eine stromaufwärts gelegene Vertiefung (12) aufweist, dass der Schirm (9) an seinem stromaufwärts gelegenen Abschnitt mindestens eine Öffnung (13) zur Lüftung des Raums aufweist, der sich zwischen dem Schirm (9) und der Rampe (6) befindet, und dass die Rampe (6) zumindest ein Paar Öffnungen (8, 8') zur Zerstäubung von Kraftstoff aufweist, wobei der Schirm (9) zumindest ein Paar entsprechende Öffnungen (10, 10') aufweist, wobei eine Öffnung (13) zur Lüftung auf dem Schirm (9) in der gleichen Winkelposition wie das Paar Öffnungen (10, 10') gebohrt ist.

2. Brennerring (4) nach Anspruch 1, wobei der Schirm (9) mehrere Paare Öffnungen (10, 10') aufweist, wober er eine Öffnung (13) zur Lüftung aufweist, die an der gleichen Winkelposition wie jedes Paar Öffnungen (10, 10') gebohrt ist.

3. Zweistrahliges Turbotriebwerk, das einen Kanal zum Heizen des primären Stroms (1) umfasst, wobei der sekundäre Stromung zumindest teilweise in dem primären Strom stromaufwärts von dem Kanal zum Heizen (1) mündet, wobei der Kanal zum Heizen (1) einen Brennerring (4) umfasst, wie er in Anspruch 1 definiert ist, der einen als Rinne ausgebildeten Flammhalter (5) in der Form eines Ringabschnitts aufweist, und dessen stromaufwärts gelegener Abschnitt in dem sekundären Strom gelegen ist, wobei sie einen Kraftstoffverteiler (6) und einen rohrförmigen Schirm (9) zum Schutz des Verteilers (6) aufnimmt, **dadurch gekennzeichnet, dass** die Rinne (5) eine stromaufwärts gelegene Vertiefung (12) aufweist, die mit dem sekundären Strom verbunden ist, und dass der Schirm (9) auf seinem stromaufwärts gelegenen Abschnitt mindestens eine Öffnung (13) zur Lüftung des Raums aufweist, der sich zwischen dem Schirm (9) und dem Verteiler (6) befindet.

4. Turbotriebwerk nach Anspruch 3, wobei der Verteiler (6) zumindest ein Paar Öffnungen (8, 8') zur Zerstäubung von Kraftstoff umfasst, wobei der Schirm (9) mindestens ein Paar entsprechende Öffnungen (10 , 10') umfasst, wobei eine Öffnung (13) zur Lüftung auf dem Schirm (9) in der gleichen Winkelposition wie das Paar von Öffnungen (10, 10') gebohrt ist.

5. Turbotriebwerk nach Anspruch 4, wobei der Schirm (9) mehrere Paar Öffnungen (10, 10') aufweist, wober er eine Öffnung (13) zur Lüftung umfasst, die an der gleichen Winkelposition wie jedes Paar Öffnungen (10, 10') gebohrt ist.

## Claims

1. Annular burner (4) for a turbomachine, including a flameholder gutter (5) in the form of a ring and of which the base is upstream, a fuel manifold (6) and a protective screen (9) of the manifold (6) being housed in the gutter, **characterised in that** the gutter (5) includes an upstream cavity (12), that the screen (9) includes, on its upstream section, at least one ventilation orifice (13) of the space situated between the screen (9) and the manifold (6), and by the fact that the manifold (6) includes at least one pair of fuel-spraying orifices (8, 8'), the screen (9) including at least one pair of corresponding orifices (10, 10'), a ventilation orifice (13) being drilled into the screen (9) at the same angular position as the pair of orifices (10, 10').

2. Annular burner (4) according to claim 1, in which the screen (9), including a plurality of pairs of orifices (10, 10'), comprises a ventilation orifice (13) drilled at the same angular position as each pair of orifices (10, 10').

3. Double flow turbomachine, comprising a reheating channel of the primary flow (1), the secondary flow emerging at least partially into the primary flow upstream of the reheating channel (1), the reheating channel (1) comprising an annular burner (4) as defined in claim 1, including a flameholder gutter (5) in the form of a ring of which the upstream section is situated in the secondary flow, housing a fuel manifold (6) and a protective tubular screen (9) of the manifold (6), **characterised in that** the gutter (5) includes an upstream cavity (12) connected to the secondary flow, and the screen (9) includes, on its upstream section, at least one ventilation orifice (13) of the space situated between the screen (9) and the manifold (6).

4. Turbomachine according to claim 3, in which the manifold (6) comprising at least one pair of fuel-spraying orifices (8, 8'), the protective screen (9) including at least one pair of corresponding orifices (10, 10'), and a ventilation orifice (13) is drilled into the screen (9) at the same angular position as the pair of orifices (10, 10').

5. Turbomachine according to claim 4, in which the screen (9), including a plurality of pairs of orifices (10, 10'), comprises a ventilation orifice (13) drilled at the same angular position as each pair of orifices (10, 10').
